# EUROPEAN PATENT APPLICATION

(11) **EP 1 813 845 A1**
(43) Date of publication of application: **01.08.2007**
(21) Application number: 06425046.7
(22) Date of filing: 31.01.2006
(51) Int. Cl.: F16K 17/04, F02M 59/46, F04B 1/04, F04B 53/10

(54) **High-pressure pump for feeding fuel to an internal combustion engine**

(71) Applicant: Centro Studi Componenti per Veicoli S.P.A., 70026 Modugno (IT)
(72) Inventor: Caroli, Vittorio, Havlickuv, Brod - Perknov (CZ); De Luca, Alessandro, 70057 Bari Palese (IT); Marino, Giuseppe, 70122 Bari (IT); Loiudice, Nicola, 70022 Altamura (IT); Cavallo, Angela, 74023 Grottaglie (IT); Guarino, Rocco, 70010 Turi (IT)
(74) Representative: Jorio, Paolo

(57) **Abstract**

A high-pressure pump for feeding fuel to an internal combustion engine has a pump housing (2); a fuel delivery duct (3); and a check valve (4; 35), which is arranged along the delivery duct (3), and comprises a seat (7); a shutter (13; 36) mobile within the seat (7); and a biasing and guiding assembly (14; 37), which has a fastening member (16; 38) suitable for being fastened to the pump housing (2) and sealing the seat (7) in a fluid-tight manner; a helical spring (17; 39) suitable for biasing the shutter (13; 36); and a bushing (18; 40) arranged about the helical spring (17; 39) in order to prevent curving of the helical spring (17; 39).

## Description

The present invention relates to a high-pressure pump for feeding fuel to an internal combustion engine.

In particular, the present invention relates to a high-pressure piston pump for feeding fuel to a common rail of an internal combustion engine.

A piston pump of this type generally comprises a pump housing in which a fuel feeding duct, at least one cylinder connected to the feeding duct and one delivery duct are made. The piston pump comprises a reciprocating mobile piston within the cylinder and a check valve, which allows the fuel flow when the pressure in the cylinder reaches a level capable of exerting a force on the shutter higher than the sum of the force exerted by the fuel pressure within the delivery duct downstream of the check valve and of the force of an antagonist spring acting on the shutter.

Generally, the check valve used in this type of high-pressure pumps extends along a given axis, is arranged along the delivery duct and comprises a seat; a mobile shutter within the seat; and a biasing and guiding assembly, which comprises a fastening member suitable to be fastened to the pump housing and to close the seat in fluid-tight manner, and a helical spring (antagonist spring) adapted to exert a bias on the shutter.

The different functional needs thus require the shutter to be made of harder material than the spring, which in turn is made of harder material than the fastening member. If to this fact it is added that the helical spring, when compressed, is subjected to curve, which, in turn, determines rotations of the spring about its longitudinal axis, it results that the spring wears out the fastening member and the ball wears out the spring. The higher the fuel flow rates, the higher and more marked the wear phenomena, that determine, in time, dimensional variations and incorrect pump operation.

Regarding this, it is relevant to observe that common rail systems are increasingly installed in commercial vehicles (in trucks, off-highway vehicles) because also this type of engine must respect anti-pollution provisions. The high power of commercial vehicles entails that the fuel pumps must be capable of managing high flow rates which are the main cause of curving in the helical spring-shutter system.

It is the object of the present invention to make a high-pressure pump for feeding fuel to an internal combustion engine which is free from the drawbacks of the known art with particular reference to the operation of the check valve at flow rates higher than 200 1/h and pressure up to 2200 bars.

According to the present invention, there is provided a high-pressure pump for feeding fuel to an internal combustion engine; the pump being characterised in that the biasing and guiding assembly comprises a bushing arranged about the helical spring to prevent curving of the helical spring.

According to the present invention, by preventing curving the bushing considerably reduces the tendency of the spring to rotate and therefore the wear of the parts in contact.

According to a preferred embodiment of the present invention, the fastening member, the helical spring and the bushing are assembled together so as to form said biasing and guiding assembly before inserting the biasing and guiding assembly in the seat.

This possibility considerably facilitates valve assembly.

For a better understanding of the present invention, preferred embodiments thereof will now be described only by way of non-limitative examples, and with reference to the accompanying drawings, in which:
- figure 1 is a sectional view with parts removed for clarity of a piston pump made according to a first embodiment of the present invention;
- figure 2 is a perspective view of a detail of the pump in figure 1;
- figure 3 is a sectional view with parts removed for clarity of a piston pump made according to a second embodiment of the present invention; and
- figure 4 is a perspective view of a detail of the pump in figure 3.

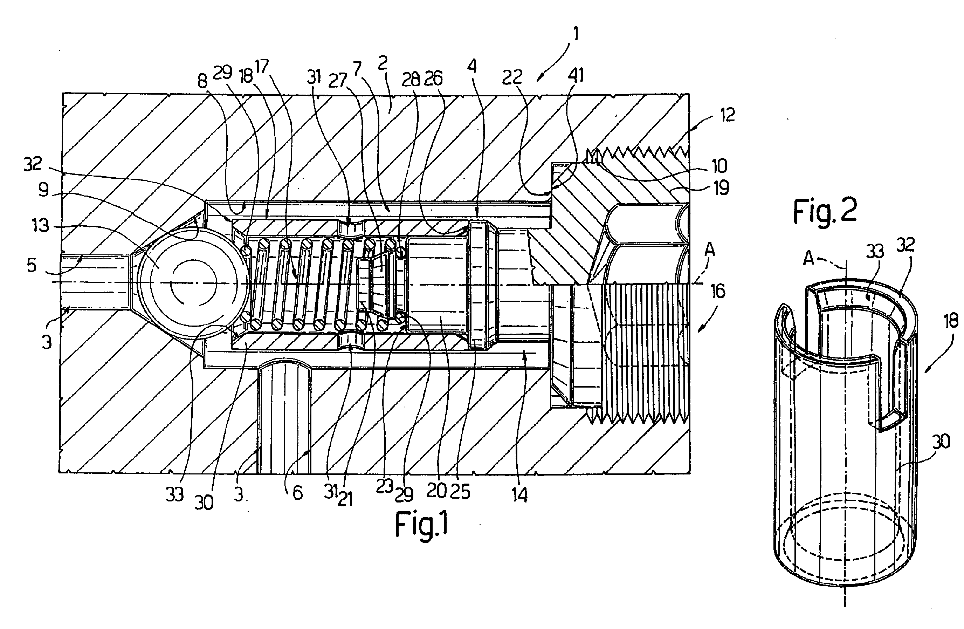

With reference to figure 1, it is indicated as a whole by 1 a piston pump suitable for receiving fuel from a low pressure pump (not shown) and for compressing the fuel to pressures higher than 2200 bars for feeding the fuel itself to a common rail of an internal combustion engine not shown in the attached figures.

The pump 1 comprises a pump housing 2 essentially made of a block of metallic material, in which there are made a cylinder (not shown), a feeding channel (not shown) of the fuel to the cylinder, a fuel delivery duct 3 of; and a check valve 4 arranged along the delivery duct 3.

The delivery duct 3 comprises a hole 5 upstream of the valve 4, a hole 6 downstream of the valve 4. The valve 4 comprises a seat 7 that is formed by a cavity in the pump housing 2. Actually, hole 5 and seat 7 extend in sequence about an axis A, while hole 6 extends radially with respect to axis A and departs from seat 7. The seat 7 comprises a hole 8 larger than hole 5 and coaxial to hole 5; a truncated cone face 9 arranged between hole 5 and hole 8; a hole 10, which is larger than hole 8, is coaxial with hole 8 and is arranged on the opposite side of the truncated cone face 9; and a shoulder 11, which is perpendicular to the axis A and is arranged between hole 10 and hole 8. Hole 10 is adjacent to an outer face 12 of the pump housing 2 and is, at least in part, threaded.

The valve 4 comprises in addition to seat 7, a shutter 13, which in the case in point is a hard material ball; a biasing and guiding assembly 14 of the shutter 13 which in rest position pushes the shutter 13 into contact with the truncated cone face 9.

The assembly 14 extends along axis A and comprises a fastening member 16 which in the case in point is a screw; a helical spring 17; and a guiding bushing 18, which is engaged on the fastening member 16, and is adapted to guide the spring 17 and to form a stopper for the shutter 13.

The fastening member 16 is formed by a single metallic part of soft material, in particular mild steel, capable of sealing the seat 7 in fluid-tight manner. With reference to figure 1, the fastening member 16 comprises, in sequence from the right leftwards along axis A, a cylindrical body 19 with axis A, partially threaded and adapted to being fastened in hole 10 to the pump housing 2; an essentially cylindrical body 20, which extends in the hole 8 and has a diameter much smaller than the diameter of hole 8 and the diameter of body 19; and an essentially cylindrical further body 21 with axis A, which in turn has a diameter much smaller than the diameter of body 20.

The sequence of bodies 19, 20, 21 having respective progressively decreasing diameters determines in order a shoulder 22 between body 19 and body 20 and a shoulder 23 between body 20 and body 21, while the shoulder 23 also perpendicular to axis A defines a resting surface for the spring 17. The body 20 has an annular protrusion 25 which defines a further shoulder 26 perpendicular to axis A and for the resting of the bushing 18. The body 21 has an annular protrusion 27 for defining a seat 28 comprised between the shoulder 23 and the annular protrusion 27 for anchoring the spring 17 to the fastening member 16.

The helical spring 17 essentially has a constant diameter except for the two end turns 29 which have a diameter smaller than the remaining turns. One of the two end turns 29 is engaged in the seat 28 so as to fasten the spring 17 to the fastening member 16.

Bushing 18 is coaxial to axis A and is essentially defined by a cylindrical wall 30 which has two openings 31 facing and opposite one another in the median position along axis A. In the specific case, the openings 31 are defined by holes.

Each one of the opposite ends of the wall 30 has an outer annular face 32 adapted to being abuttingly arranged against the shoulder 26 and an inner truncated cone face 33, which substantially defines a chamfering and acts as stopper for the shutter 13. Between the bushing 18 and the hole 8 there is a cylindrically-shaped free space in which the fuel may freely circulate.

In use, the pump 1 feeds pressurised fuel along the delivery duct 3. When the pressure in the hole 5, following the compression, increases and it overcomes the force exerted jointly by the pressure in seat 7 and in hole 6 on the shutter 13 and by the bias of the spring 17, fuel pushes the shutter 13 directly against the bushing 18 abuttingly on the truncated cone annular face 33. At the same time, the spring 17 is compressed and the bushing 18 avoids the curving of the spring 17, thus enormously limiting the rotation of the spring 17 about the axis A and, therefore, the wear of the spring 17 and of the fastening member 16. The fuel contained in the bushing 18 following the squeezing of the shutter 13 is let out through the openings 31 in the space comprised between the bushing 18 and the hole 8 of the seat 7.

The spring 17 and the bushing 18 have a mirror symmetry with respect to a median plane perpendicular to axis A. This fact allows to fit the spring 17 and the bushing 18 either in one direction or in the opposite direction, thus enormously simplifying the assembly stages. The assembly stage is further simplified by the fact that assembly 14 may be pre-fitted before inserting the assembly in the seat 7 by engaging one of the end turns 29 in the seat 28 and slightly forcing the bushing 18 about the body 20 against the shoulder 26.

According to the variation shown in figure 2, the bushing 18 instead of having hole-shaped openings 31 has openings 34, each of which has the shape of a slot parallel to axis A which departs from one of the ends of the bushing 18 itself.

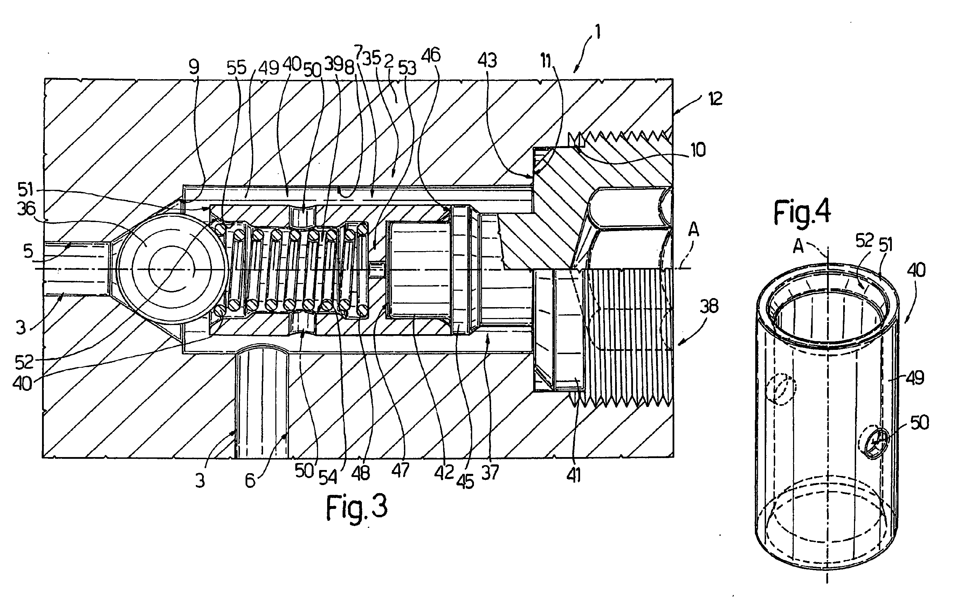

According to the embodiment in figure 3, the pump 1 has a pump housing 2 identical to that shown in figure 1 and for this reason the same reference numbers used in figure 1 will be used to indicate identical parts. The pump 1 in figure 3 has a check valve 35 which, in addition to seat 7, has a shutter 36 and a biasing and guiding assembly 37 of the shutter 36 against the truncated cone face 9.

The assembly 37 extends along axis A and comprises a fastening member 38; a helical spring 39; and a guiding bushing 40, which is engaged on the fastening member 38 and is adapted to guide the spring 39 and to make a stopper for the shutter 36.

The fastening member 38 is made of soft and malleable material, in particular mild steel, capable of sealing the seat 7. With reference to figure 1, the fastening member 38 comprises, in sequence from the right leftwards along axis A, a partially threaded cylindrical body 41 with axis A adapted to being fastened in hole 10 to the pump housing 2; and an essentially cylindrical body 42, which extends into hole 8 and has a diameter much smaller than the diameter of hole 8 and the diameter of body 41.

Between body 41 and body 42 there is a shoulder 43 which abuts against the shoulder 11. The body 42 has an annular projection 45 which defines a further shoulder 46 for resting the bushing 40, and its distal end is delimited by a flat circular face 47.

The helical spring 39 essentially has a constant diameter except for the two end turns 48 which have a larger diameter with respect to the constant diameter of the remaining turns.

Bushing 40 is coaxial to axis A and substantially defines a cylindrical wall 49 which has two facing and opposite openings 50 defined by holes. As shown in better detail in figure 4, each one of the opposite ends of the wall 49 have an outer annular face 51 adapted to be abuttingly arranged against the shoulder 46 and an inner truncated cone face 52 which essentially defines a chamfering and acts as stopper for the shutter 36. The bushing 40 further comprises an annular wall 53 which is arranged within the cylindrical wall 49 and is adapted to being abuttingly arranged against the cylindrical body 42 in contact with the flat cylindrical face 47. Actually, the annular wall 53 acts as a resting surface for the spring 39. With reference to figure 3, the bushing 40 has an inner annular cavity 54 at the inner annular wall 53 and an annular cavity 55 flowing into the truncated cone face 52 at the shutter 36. The annular cavities 54 and 55 accommodate the end turns 48 of the helical spring 39. In particular, the annular cavity 54 allows to insert one of the end turns 48 of the spring 39 between the annular wall 53 and the annular wall 49 of the bushing 40.

The embodiment in figure 3 has the same advantages as the embodiment described with reference to figure 1 except for the fact that the bushing 40 does not have mirror symmetry. In addition to these advantages, the bushing 40 is made of particularly hard material, thus preventing accentuated wear of the fastening member 38 because the helical spring 39 is in contact with the annular wall 53 of the bushing 40 instead of the fastening member 38.

## Claims

1. A high-pressure pump for feeding fuel to an internal combustion engine; the pump (1) comprising a pump housing (2); a fuel delivery duct (3); and a check valve (4; 35), which extends along an axis (A), is arranged along the delivery duct (3), and comprises a seat (7); a shutter (13; 36) mobile within the seat (7); and a biasing and guiding assembly (14; 37), which comprises a fastening member (16; 38) suitable for being fastened to the pump housing (2) and sealing the seat (7) in a fluid-tight manner, and a helical spring (17; 39) suitable biasing the shutter (13; 36); the pump being **characterised in that** the biasing and guiding assembly (14; 37) comprises a bushing (18; 40) arranged about the helical spring (17; 39) in order to prevent curving of the helical spring (17; 39).

2. A high-pressure pump according to claim 1, **characterised in that** the fastening member (16; 38); the helical spring (17; 39) and the bushing (18; 40) can be assembled together so as to form said biasing and guiding assembly (14; 37) before inserting the biasing and guiding assembly (14; 37) in the seat (7).

3. A pump according to claim 2, **characterised in that** the fastening member (16; 38) is fastened to the pump housing (2) and comprises a first threaded cylindrical body (19; 41) and a second cylindrical body (20; 42) on which the bushing (18; 40) is fitted.

4. A pump according to claim 3, **characterised in that** the fastening member (16) comprises a third cylindrical body (42) comprising a seat (28) for fastening the helical spring (17).

5. A pump according to claim 4, **characterised in that** the helical spring (17) has two end turns (29) arranged respectively on the opposite ends of the helical spring (17) and having a diameter smaller than the essentially constant diameter of the remaining turns; each end turn (29) being adapted to being snappingly engaged in the seat (28).

6. A pump according to claim 3, **characterised in that** the bushing (40) has an inner annular cavity (54) adapted to fasten the helical spring (39) to the bushing (40).

7. A pump according to claim 6, **characterised in that** said helical spring (39) has two end turns (48) arranged respectively on the opposite ends of the helical spring (39) and having a diameter larger than the essentially constant diameter of the remaining turns; each end turn (48) being adapted to being snappingly engaged in the annular cavity (54) of the bushing (40).

8. A pump according to any of the preceding claims, **characterised in that** the bushing (18; 40) comprises a face (33; 52) adapted to limit the stroke of the shutter (13; 36) during the opening stroke of the check valve (4; 35).

9. A pump according to any of the preceding claims, **characterised in that** the bushing (18; 40) comprises a cylindrical wall (30; 49) along which openings are arranged (31; 50).

10. A pump according to any of the preceding claims, **characterised in that** the bushing (18; 40) is arranged in the seat (7) and is surrounded by a free space through which fuel flows.

11. A pump according to any of the preceding claims, **characterised in that** the bushing (40) comprises an inner wall (53) essentially perpendicular to the axis (A) and adapted to define a resting surface of one of the ends of the spring (39).

12. A pump according to claim 10, **characterised in that** the inner wall (53) has an annular shape.

13. A pump according to claim 10 to 11, **characterised in that** the helical spring (39) and the bushing (40) are made of materials having essentially the same hardness.

## Amended claims

### Amended claims in accordance with Rule 86(2) EPC.

**1.** A high-pressure piston pump (1) for delivering fuel to a common rail of an internal combustion engine comprises a pump body (2); a fuel delivery conduit (3); and a delivery valve (4), which extends along a first axis (A), is located along the delivery conduit (3) and comprises a valve seat (7); a shutter (13); a fastening member (14) fitted in fluid-tight manner to the pump body (2); and a helical spring (15), which is wound about a second axis (A1) to form a number of turns (28, 29) comprising a first end turn (29) resting against a surface (21) of said fastening member (14) and a second end turn (29) acting on said shutter (18); said high-pressure piston pump (1) being **characterized in that** each of said first and second end turns (29) comprises an end contact portion (30) running perpendicular to said second axis (A1).

**2.** A high-pressure piston pump as claimed in claim 1, **characterized in that** said end contact portion (30) extends for a length equal to about three quarter of the length of an end turn (29).

**3.** A high-pressure piston pump according to claim 1 or 2, **characterized in that** each of said end contact portion (30) is of constant diameter.
